# EUROPEAN PATENT APPLICATION

(11) **EP 2 915 866 A1**
(43) Date of publication of application: **09.09.2015**
(21) Application number: 12887555.6
(22) Date of filing: 31.10.2012
(51) Int. Cl.: C09K 11/87

(54) **ALUMINATE LUMINESCENT MATERIAL AND PREPARATION METHOD THEREFOR**

(71) Applicant: Ocean's King Lighting Science&Technology Co., Ltd., Guangdong 518054 (CN); Shenzhen Ocean's King Lighting Engineering Co. Ltd., Guangdong 518054 (CN)
(72) Inventor: ZHOU, Mingjie, Shenzhen Guangdong 518054 (CN); WANG, Rong, Shenzhen Guangdong 518054 (CN)
(74) Representative: Johnson, Richard Alan
(86) International application number: PCT/CN2012/083875
(87) International publication number: WO 2014/067109

(57) **Abstract**

An aluminate luminescent material with a general molecular formula of Y₃₋ₓAl₅O₁₂:Lnₓ,M_{y} is provided, Ln is selected from at least one of Ce and Tb; M is selected from at least one of Ag, Au, Pt, Pd, and Cu, x is in a range of 0<x≤0.05, y is a molar ratio of M to Al and y is in a range of 0<y ≤1×10⁻². The aluminate luminescent material is formed by codoping Ln and M in a Y₃₋ₓAl₅O₁₂ substrate, of which M can improve internal quantum efficiency and luminescent intensity of the luminescent material. In addition, Y₃₋ₓAl₅O₁₂ has high stability, which can prevent a phenomenon where luminescent efficiency of the luminescent material is reduced because a traditional sulfide and sulfur oxide decompose during use and sediment generated in decomposition covers a surface of the luminescent material. Also provided is a preparation method thereof.

## Description

### FIELD OF THE INVENTION

The present invention relates to luminescent material technology. More particularly, the invention relates to an aluminate luminescent material and preparation method thereof.

### BACKGROUND OF THE INVENTION

In the 1960s, Ken Shoulder proposed ideas based on field emissive arrays (Field Emissive Arrays, FEAs) electron beam microelectronic devices, thus, to design and produce panel display and light resource devices (Field Emission Display, FED) by using FEAs has drawn the public's attention. Similar to the working principle of conventional cathode ray tube (Cathode Ray Tube, CRT), such new field emission display lights and forms images by electron beam bombardment on red, green blue trichromatic fluorescent powder. Field emission display has potential advantages in luminance, visual angle, response time, working temperature range, energy consumption and other aspects.

A key factor to prepare field emission display of high performances is to prepare luminescent material of excellent performance. At present, luminescent material provided in field emission display are commonly luminescent material of traditional cathode ray tube and projection television kinescope, such as sulfide series, and oxysulfide series luminescent material. As for sulfide series and oxysulfide series luminescent material, they have high luminance and electrical conductivity, but, under the large electron beam bombardment, they prone to decompose into elemental sulfur, which can poison the tip of cathode and produce other precipitates covering the luminescent material, so as to reduce the luminescent efficiency of luminescent material, and shorten the life of a field emission display.

### SUMMARY OF THE INVENTION

In view of this, the present invention provides an aluminate luminescent material and preparation method therefor, said aluminate luminescent material has high luminescent intensity and good stability.

An aluminate luminescent material, said aluminate luminescent material has a general molecular formula of Y₃₋ₓAl₅O₁₂:Lnₓ,M_{y}, Ln is selected from at least one of Ce and Tb, M is selected from at least one of Ag, Au, Pt, Pd, and Cu metal nanoparticles, x is in a range of 0<x≤0.05, y is a molar ratio of M to Al and y is in a range of 0<y ≤ 1 × 10⁻².

In one embodiment of the present invention, x is in a range of 0.01 ≤ x ≤ 0.3.

In one embodiment of the present invention, y is in a range of 1×10⁻⁵≤y≤5×10⁻³.

A method for preparing an aluminate luminescent material, comprising:

dissolving aluminium oxide aerogel in ethanol solution containing M, stirring and sonicating mixture of aluminium oxide aerogel and ethanol solution containing M, then drying, and grinding solid material obtained from drying, calcining said solid material at 600°C to 1200°C for 0.5 to 4 hours to obtain aluminium oxide aerogel containing M, wherein the M is selected from at least one of Ag, Au, Pt, Pd, and Cu nanoparticles;

selecting source compound of Y, source compound of Ln and said aluminium oxide aerogel containing M according to stoichiometric ratios of corresponding elements in general molecular formula of Y₃₋ₓAl₅O₁₂:Lnx,M_{y}, mixing and grinding uniformly to form mixture material, calcining said mixture material under reducing atmosphere at 1300°C to 1700°C for 2 to 8 hours, cooling and grinding to obtain aluminate luminescent material has a general molecular formula of Y₃₋ₓAl₅O₁₂:Lnₓ,M_{y}, wherein Ln is selected from at least one of Ce and Tb, x is in a range of 0 < x ≤ 0.05, y is a molar ratio of M to A1 and y is in a range of 0<y ≤1 × 10⁻².

In one embodiment of the present invention, a concentration of said M in said ethanol solution containing M is in a range of 5×10⁻⁶mol/L to 1×10⁻²mol/L.

In one embodiment of the present invention, said stirring is processed at 50°C to 75°C for 0.5 to 3 hours.

In one embodiment of the present invention, said sonicating is processed for 5∼20 mintues.

In one embodiment of the present invention, said drying is processed at 60°C to 150°C.

In one embodiment of the present invention, said source compound of Y is one of yttrium oxide, yttrium nitrate, yttrium carbonate, yttrium chloride and yttrium oxalate, said source compound of Ln is one of lanthanide oxide, lanthanide nitrate, lanthanide carbonate, lanthanide chloride and lanthanide oxalate.

In one embodiment of the present invention, said reducing atmosphere is selected from at least one of mixed gases of N₂ and H₂ reducing atmosphere, C powder reducing atmosphere, CO reducing atmosphere, and H₂ reducing atmosphere.

The aluminate luminescent material has a general molecular formula of Y₃₋ₓAl₅O₁₂:Lnₓ,M_{y}, formed by codoping Ln and M in a Y₃Al₅O₁₂ substrate, of which metal nanoparticles M can improve internal quantum efficiency of the luminescent material, thereby improving luminescent intensity of the aluminate luminescent material. In addition, Y₃Al₅O₁₂ used as substrate is stable so that the aluminate luminescent material has high stability, which can prevent a phenomenon where luminescent efficiency of the luminescent material is reduced because a traditional sulfide and sulfur oxide decompose during use and sediment generated in decomposition covers a surface of the luminescent material.

### BRIEF DESCRIPTION OF THE DRAWINGS

Fig. 1 is a flow chart of the preparation method for aluminate luminescent material of one embodiment.
Fig. 2 is a cathodoluminescence spectrum of aluminate luminescent material Y₂.₈₈Al₅O₁₂:Tb_{0.12},Ag_{2.5×10}-4 excited by cathode ray under 1.5kv acceleration voltage in Example 2 with respect to aluminate luminescent material Y₂.₈₈Al₅O₁₂:Tb_{0.12} which is tested under the same conditions.

### DETAILED DESCRIPTION OF ILLUSTRATED EMBODIMENTS

Further description of the aluminate luminescent material and preparation method therefor will be illustrated combined with embodiments and drawings.

In one embodiment of the present invention, aluminate luminescent material has a general molecular formula of Y₃₋ₓAl₅O₁₂:Lnₓ,M_{y}.

Wherein, Ln is selected from at least one of Ce and Tb.

M is selected from at least one of Ag, Au, Pt, Pd, and Cu metal nanoparticles.

X is in a range of 0<x≤0.05, preferably, x is in a range of 0.01≤x≤0.3.

Y is a molar ratio of M to A1 and y is in a range of 0<y ≤1×10⁻², preferably, y is in a range of 1×10⁻⁵≤y≤5×10⁻³.

":" refers to doping, the aluminate luminescent material is formed by codoping rare earth element Ln and metal nanoparticles M in a Y₃Al₅O₁₂ substrate.

Y₃Al₅O₁₂ is an aluminate with perovskite structure, and is an excellent laser and scintillator matrix. Y₃₋ₓAl₅O₁₂:Lnₓ is formed by using Y₃Al₅O₁₂ as luminescent substrate, and doping rare earth element Ln as emission center which partially replace Y. Trivalent Ln³⁺ ions are used as active ion of aluminate luminescent material. Trivalent Ce³⁺ and Tb³⁺ ions have similar ionic radius as that of trivalent Y³⁺ ions, so there can be doped into Y₃Al₅O₁₂ easely and replace Y³⁺ ions thus to activate luminescent substrate to illuminate light.

Metal nanoparticles M is used for improve internal quantum efficiency of the aluminate luminescent material, thereby improving luminescent intensity.

The aluminate luminescent material has a general molecular formula of Y₃₋ₓAl₅O₁₂:Lnₓ ,M_{y}, formed by codoping rare earth element Ln and metal nanoparticles M in a Y₃Al₅O₁₂ substrate, wherein M can induce surface plasmon resonance effect performance thus to improve internal quantum efficiency of the luminescent material, thereby improving luminescent intensity of aluminate luminescent material.

In addition, Y₃Al₅O₁₂ has good thermal conductivity, mechanical strength, and relatively stable chemical properties. With using Y₃Al₅O₁₂ as substrate, the aluminate luminescent material has high stability, which can prevent a phenomenon where luminescent efficiency of the luminescent material is reduced because a traditional sulfide and sulfur oxide decompose during use and sediment generated in decomposition covers a surface of the luminescent material.

Said aluminate luminescent material is formed by doping metal nanoparticles M in a Y₃Al₅O₁₂ Y₃₋ₓAl₅O₁₂:Lnₓ, while the doping of metal nanoparticles M will no change the luminescent substrate structure, so it keeps the stability of Y₃₋ₓAl₅O₁₂:Lnₓ.

Therefore, the use of aluminate luminescent material in field of emission display field, helps improving the luminescent performance and service life of emission display field.

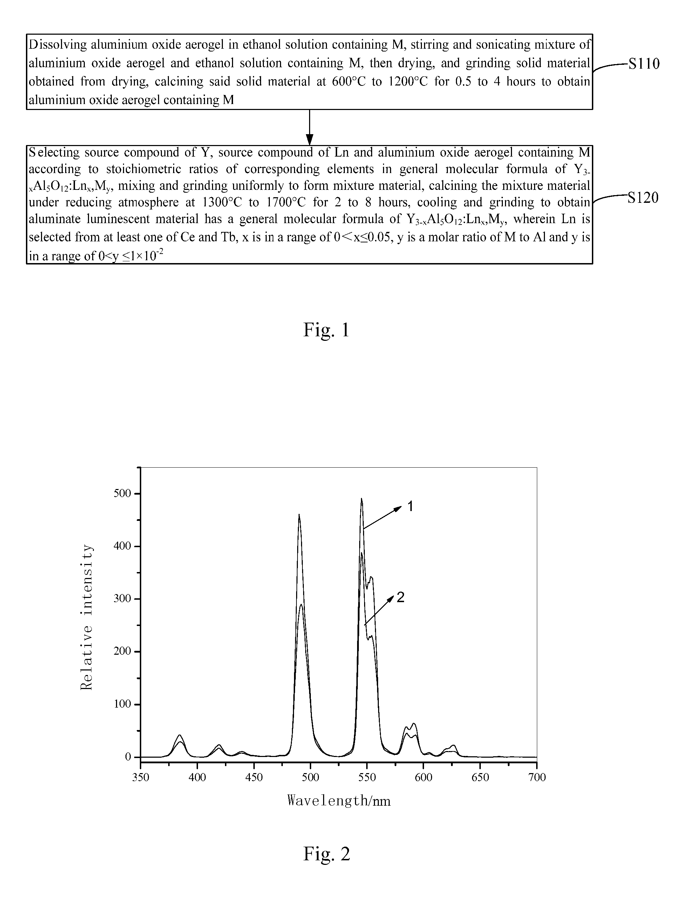

Refers to Fig 1, in one embodiment of the present invention, a method for preparing an aluminate luminescent material, comprising:

Step S110: dissolving aluminium oxide aerogel in ethanol solution containing M, stirring and sonicating mixture of aluminium oxide aerogel and ethanol solution containing M, then drying, and grinding solid material obtained from drying, calcining said solid material at 600°C to 1200°C for 0.5 to 4 hours to obtain aluminium oxide aerogel containing M.

M is selected from at least one of Ag, Au, Pt, Pd, and Cu metal nanoparticles.

The ethanol solution containing M is obtained by dissolve metallic compound of M in ethanol, wherein, preferably, the concentration of said M is in a range of 5×10⁻⁶mol/L to 1×10⁻²mol/L.

The molar ratio of M to aluminium oxide aerogel is expressed as z, and z is in a range of 0≤z≤5×10⁻³.

Dissolving aluminium oxide (Al₂O₃) aerogel in ethanol solution containing M, and then stirring to have aluminium oxide aerogel fully dissolved. Preferably, stirring is processed at 50°C to 75°C for 0.5 to 3 hours.

After stirring, sonicating to have M fully and uniformed adsorbed in aluminium oxide aerogel. Preferably, sonicating is processed for 10 mintues.

And then process drying at 60°C to 150°C, and grinding solid material obtained from drying, calcining said solid material at 600°C to 1200°C for 0.5 to 4 hours to remove crystal water, and thus obtaining aluminium oxide aerogel containing M.

Step S120: selecting source compound of Y, source compound of Ln and aluminium oxide aerogel containing M according to stoichiometric ratios of corresponding elements in general molecular formula of Y₃₋ₓAl₅O₁₂:Lnx,M_{y}, mixing and grinding uniformly to form mixture material, calcining the mixture material under reducing atmosphere at 1300°C to 1700°C for 2 to 8 hours, cooling and grinding to obtain aluminate luminescent material has a general molecular formula of Y₃₋ₓAl₅O₁₂:Lnₓ,M_{y}, wherein Ln is selected from at least one of Ce and Tb, x is in a range of 0 < x ≤ 0.05, y is a molar ratio of M to A1 and y is in a range of O < y ≤ 1× 10⁻².

Source compound of Y is one of yttrium oxide, yttrium nitrate, yttrium carbonate, yttrium chloride and yttrium oxalate.

Such as, source compound of Y is one of Y₂O₃ Y(NO₃)₃·6H₂O, Y₂(CO₃)₃, YCl₃, Y₂(C₂O₄)₃^{·}10H₂O.

Source compound of Ln is one of lanthanide oxide, lanthanide nitrate, lanthanide carbonate, lanthanide chloride and lanthanide oxalate.

Such as, source compound of Ln is one of Tb₄O₇, Ce(NO₃)₃·6H₂O, Tb(NO₃)₃·6H₂O, Ce₂(CO₃)₃, Ce₂(C₂O₄)₃, TbCl₃.

Reducing atmosphere is selected from at least one of a mixed reducing atmosphere of a volume ratio of 95% N₂ and a volume ratio of 5%H₂, C powder reducing atmosphere, CO reducing atmosphere, and H₂ reducing atmosphere.

Cooling to room temperature, and further grinding to obtain aluminate luminescent material with small particles size and uniformed distribution. The aluminate luminescent material has a general molecular formula of Y₃₋ₓAl₅O₁₂:Lnₓ,M_{y}, wherein Ln is selected from at least one of Ce and Tb, M is selected from at least one of Ag, Au, Pt, Pd, and Cu metal nanoparticles, x is in a range of 0 < x≤0.05, y is a molar ratio of M to A1 and y is in a range of 0<y≤1×10⁻².

Said preparation method of the aluminate luminescent material comprises: adsorbing metal nanoparticles M by aluminium oxide aerogel to obtain aluminium oxide aerogel containing metal nanoparticles, and then using it as starting material to prepare aluminate luminescent material by high-temperature solid-phase method. The aluminate luminescent material has a general molecular formula of Y₃₋ₓAl₅O₁₂:Lnₓ,M_{y}, which is formed by codoping rare earth element Ln and metal nanoparticles M in a Y₃Al₅O₁₂ substrate. The aluminate luminescent material obtained by said preparation method has the advantage of high purity.

Said preparation methods of aluminate luminescent material are of simple process, low demand on equipment, no pollution, easy to control, easy to produce in industry. The aluminate luminescent material prepared from this method has high luminescent intensity and good stability.

Special embodiments are disclosed as follows.

### Example 1

### Preparation of Y_{2.99}Al₅O₁₂:Ce_{0.01}, Put_{5×10-3} by high-temperature solid-phase method.

### (1) Preparation of Al₂O₃ aerogel containing Pt.

Weighing 0.6117g of Al₂O₃ aerogel, dissolving it in 12 ml of ethanol solution containing H₂PtCl₆·H₂O where the concentrate of H₂PtCl₆·H₂O is 5×10⁻³mol/L. Stirring the mixture of Al₂O₃ aerogel and ethanol solution containing H₂PtCl₆·6H₂O at 50□ for 3h, and sonicating the mixture for 10 minutes, then drying at 60□. Grinding solid material obtained from drying, calcining said solid material at 600°C for 4 hours to obtain Al₂O₃ aerogel containing Pt.

### (2) Preparation of Y_{2.99}Al₅O₁₂:Ce_{0.01},Pt_{5×10-3}.

Weighing 1.0698g of Y₂(CO₃)₃, 0.0046g of Ce₂(CO₃)₃ and 0.5098g of Al₂O₃ aerogel containing Pt⁴⁺, grinding uniformly in agate mortar to form mixture material powder, then placing the mixture material powder into corundum crucible, calcining the mixture material powder in tube furnace under a mixed reducing atmosphere of a volume ratio of 95% N₂ and a volume ratio of 5%H₂ at 1700°C for 2 hours, cooling to room temperature, and grinding to obtain aluminate luminescent material containing Pt has a molecular formula of Y₂.₉₉Al₅O₁₂:Ce_{0.01},Pt_{5×10-3};.

### Example 2

### Preparation of Y₂.₈₈Al₅O₁₂:Tb_{0.12}, Ag_{2.5×10-4} by high-temperature solid-phase method.

### (1) Preparation of Al₂O₃ aerogel containing Ag.

Weighing 0.6117g of Al₂O₃ aerogel, dissolving it in 15 ml of ethanol solution containing AgNO₃ where the concentrate of AgNO₃ is 2×10⁻⁴mol/L. Stirring the mixture of Al₂O₃ aerogel and ethanol solution containing AgNO₃ at 60□ for 2h, and sonicating the mixture for 10 minutes, then drying at 80□. Grinding solid material obtained from drying, calcining said solid material at 800°C for 2 hours to obtain Al₂O₃ aerogel containing Ag.

### (2) Preparation of Y_{2.88}Al₅O₁₂:Tbo.i2, Ag_{2.5×10-4}.

Weighing 0.6503g of Y₂O₃ 0.0448g of Tb₄O₇ and 0.5098g of Al₂O₃ aerogel containing Ag⁺, grinding uniformly in agate mortar to form mixture material powder, then placing the mixture material powder into corundum crucible, calcining the mixture material powder in muffle furnace under C powder reducing atmosphere at 1500°C for 4 hours, cooling to room temperature, and grinding to obtain aluminate luminescent material containing Ag has a molecular formula of Y_{2.88}Al₅O₁₂:Tb_{0.12}, Ag_{2.5×10-4}.

Fig. 2 is a cathodoluminescence spectrum of aluminate luminescent material Y₂.₈₈Al₅O₁₂:Tb_{0.12},Ag_{2.5×10}-4 excited by cathode ray under 1.5kv acceleration voltage in Example 2 with respect to aluminate luminescent material Y₂.₈₈Al₅O₁₂:Tb_{0.12} which is tested under the same conditions. Wherein, curve 1 is spectrum of aluminate luminescent material Y₂.₈₈Al₅O₁₂:Tb_{0.12},Ag_{2.5×10-4}, and curve 2 is spectrum of aluminate luminescent material Y_{2.88}Al₅O₁₂:Tb_{0.12}.

As shown from Fig. 2, luminescent intensity of aluminate luminescent material Y₂.₈₈Al₅O₁₂:Tb_{0.12},Ag_{2.5×10-4} at emission peak at 544nm is 25% more than that of aluminate luminescent material Y_{2.88}Al₅O₁₂:Tb_{0.12}.

### Example 3

### Preparation of Y_{2.5}Al₅O₁₂:Tb_{0.50}, Au_{1×10-2} by high-temperature solid-phase method.

### (1) Preparation of Al₂O₃ aerogel containing Au.

Weighing 0.6117g of Al₂O₃ aerogel, dissolving it in 12 ml of ethanol solution containing HAuCl₄ where the concentrate of HAuCl₄ is 1×10⁻²mol/L. Stirring the mixture of Al₂O₃ aerogel and ethanol solution containing HAuCl₄ at 75□ for 0.5h, and sonicating the mixture for 20 minutes, then drying at 150□. Grinding solid material obtained from drying, calcining said solid material at 1200°C for 0.5 hours to obtain Al₂O₃ aerogel containing Au.

### (2) Preparation of Y_{2.5}Al₅O₁₂:Tb_{0.50}, Au_{1×10-2}.

Weighing 0.5645g of Y₂O₃ 0.1868g of Tb₄O₇ and 0.5098g of Al₂O₃ aerogel containing Au³⁺, grinding uniformly in agate mortar to form mixture material powder, then placing the mixture material powder into corundum crucible, calcining the mixture material powder in tube furnace under a mixed reducing atmosphere of a volume ratio of 95% N₂ and a volume ratio of 5%H₂ at 1450°C for 6 hours, cooling to room temperature, and grinding to obtain aluminate luminescent material containing Au has a molecular formula of Y_{2.5}Al₅O₁₂:Tb_{0.50}, Au_{1×10-2}.

### Example 4

### Preparation of Y₂.₇Al₅O₁₂:Ce_{0.10}, Tb_{0.20}, Pd_{4×10-3} by high-temperature solid-phase method.

### (1) Preparation of Al₂O₃ aerogel containing Pd.

Weighing 0.3058g of Al₂O₃ aerogel, dissolving it in 15 ml of ethanol solution containing PdCl₂·2H₂O where the concentrate of PdCl₂·2H₂O is 1×10⁻⁴mol/L. Stirring the mixture of Al₂O₃ aerogel and ethanol solution containing PdCl₂·2H₂O at 65□ for 1.5h, and sonicating the mixture for 15 minutes, then drying at 120□. Grinding solid material obtained from drying, calcining said solid material at 1100°C for 2 hours to obtain Al₂O₃ aerogel containing Pd.

### (2) Preparation of Y_{2.7}Al₅O₁₂:Ce_{0.10}, Tb_{0.20}, Pd_{4×10-3}.

Weighing 1.4844g of Y (NO₃)₃·6H₂O, 0.0652g of Ce(NO₃)₃·6H₂O, 0.1379g of Tb(NO₃)₃·6H₂O and 0.5098g of Al₂O₃ aerogel containing Pd, grinding uniformly in agate mortar to form mixture material powder, then placing the mixture material powder into corundum crucible, calcining the mixture material powder in tube furnace under a mixed reducing atmosphere of a volume ratio of 95% N₂ and a volume ratio of 5%H₂ at 1400°C for 4 hours, cooling to room temperature, and grinding to obtain aluminate luminescent material containing Pd has a molecular formula of Y_{2.7}Al₅O₁₂:Ce_{0.10}, Tb_{0.20}, Pd₄ₓ₁₀₋₃.

### Example 5

### Preparation of Y₂.₈₈Al₅O₁₂:Ce_{0.12}, Ag_{1×10-5} by high-temperature solid-phase method.

### (1) Preparation of Al₂O₃ aerogel containing Ag⁺.

Weighing 0.6117g of Al₂O₃ aerogel, dissolving it in 24 ml of ethanol solution containing AgNO₃ where the concentrate of AgNO₃ is 5×10⁻⁶mol/L. Stirring the mixture of Al₂O₃ aerogel and ethanol solution containing AgNO₃ at 65□ for 1.5h, and sonicating the mixture for 5 minutes, then drying at 120□. Grinding solid material obtained from drying, calcining said solid material at 900°C for 3 hours to obtain Al₂O₃ aerogel containing Ag⁺.

### (2) Preparation of Y_{2.88}Al₅O₁₂:Ce_{0.12}, Ag_{1×10-5}.

Weighing 1.2723g of Y₂ (C₂O₄)₃.₁₀H₂O, 0.0653g of Ce(C₂O₄)₃ and 0.5098g of Al₂O₃ aerogel containing Ag, grinding uniformly in agate mortar to form mixture material powder, then placing the mixture material powder into corundum crucible, calcining the mixture material powder in tube furnace under CO reducing atmosphere at 1300°C for 8 hours, cooling to room temperature, and grinding to obtain aluminate luminescent material containing Ag⁺. has a molecular formula of Y_{2.88}Al₅O₁₂:Ce_{0.12}, Ag_{1×10-5}.

### Example 6

### Preparation of Y₂.₇₀Al₅O₁₂:Tb_{0.30}, Cu_{5×10-4} by high-temperature solid-phase method.

### (1) Preparation of Al₂O₃ aerogel containing Cu.

Weighing 0.6117g of Al₂O₃ aerogel, dissolving it in 12 ml of ethanol solution containing Cu (NO₃)₂ where the concentrate of Cu (NO₃)₂ is 5×10⁻⁴mol/L. Stirring the mixture of Al₂O₃ aerogel and ethanol solution containing Cu (NO₃)₂ at 70□ for 1h, and sonicating the mixture for 10 minutes, then drying at 70□. Grinding solid material obtained from drying, calcining said solid material at 800°C for 2 hours to obtain Al₂O₃ aerogel containing Cu.

### (2) Preparation of Y₂.₇₀Al₅O₁₂:Tb_{0.30}, Cu_{5×10-4}.

Weighing 1.0544g of YCl₃, 0.1591g of TbCl₃; and 0.5098g of Al₂O₃ aerogel containing Cu, grinding uniformly in agate mortar to form mixture material powder, then placing the mixture material powder into corundum crucible, heating the mixture material powder in muffle furnace at 1600°C for 3 hours and then calcining the mixture material powder in tube furnace under a mixed reducing atmosphere of a volume ratio of 95% N₂ and a volume ratio of 5%H₂ at 1400°C for 2 hours, cooling to room temperature, and grinding to obtain aluminate luminescent material containing Cu has a molecular formula of Y_{2.70}Al₅O₁₂:Tb_{0.30}, Cu_{5×10-4}.

### Example 7

### Preparation of Y_{2.90}Al₅O₁₂:Ce_{0.10},(Ag_{0.5}/Au_{0.5})_{1.25×10-3}; by high-temperature solid-phase method.

### (1) Preparation of Al₂O₃ aerogel containing Ag and Au.

Weighing 0.6117g of Al₂O₃ aerogel, dissolving it in 15 ml of ethanol solution containing AgNO₃ and HAuCl₄ where the concentrate of AgNO₃ is 1×10⁻³mol/L and the concentrate of HAuCl₄ is 1×10⁻³Mol/L. Stirring the mixture of Al₂O₃ aerogel and ethanol solution containing AgNO₃ and HAuCl₄ at 60□ for 2h, and sonicating the mixture for 10 minutes, then drying at 80□. Grinding solid material obtained from drying, calcining said solid material at 1000°C for 4 hours to obtain Al₂O₃ aerogel containing Ag and Au.

### (2) Preparation of Y_{2.90}Al₅O₁₂:Ce_{0.10},(Ag_{0.5}/Au_{0.5})_{1.25×10-3}.

Weighing 1.5944g of Y (NO₃)₃·6H₂O and Ce (NO₃)_{3·}6H₂O and 0.5098g of Al₂O₃ aerogel containing Ag and Au, grinding uniformly in agate mortar to form mixture material powder, then placing the mixture material powder into corundum crucible, calcining the mixture material powder under C powder and CO reducing atmosphere at 1500°C for 3 hours, cooling to room temperature, and grinding to obtain aluminate luminescent material containing Ag and Au has a molecular formula of Y₂.₉₀Al₅O₁₂:Ce_{0.10,}(Ag_{0.5}/Au_{0.5})_{1.25×10-3}.

While the present invention has been described with reference to particular embodiments, it will be understood that the embodiments are illustrative and that the invention scope is not so limited. Alternative embodiments of the present invention will become apparent to those having ordinary skill in the art to which the present invention pertains. Such alternate embodiments are considered to be encompassed within the scope of the present invention. Accordingly, the scope of the present invention is described by the appended claims and is supported by the foregoing description.

## Claims

1. An aluminate luminescent material, wherein said aluminate luminescent material has a general molecular formula of Y₃₋ₓAl₅O₁₂:Lnx,M_{y}, Ln is selected from at least one of Ce and Tb, M is selected from at least one of Ag, Au, Pt, Pd, and Cu nanoparticles, x is in a range of 0<x≤0.05, y is a molar ratio of M to Al and y is in a range of 0<y ≤1 × 10⁻².

2. The aluminate luminescent material as in claim 1, wherein said x is in a range of 0.01≤x≤0.3.

3. The aluminate luminescent material as in claim 1, wherein said y is in a range of 1×10⁻⁵≤y≤5×10⁻³.

4. A method for preparing an aluminate luminescent material, comprising:
dissolving aluminium oxide aerogel in ethanol solution containing M, stirring and sonicating mixture of aluminium oxide aerogel and ethanol solution containing M, then drying, and grinding solid material obtained from drying, calcining said solid material at 600°C to 1200°C for 0.5 to 4 hours to obtain aluminium oxide aerogel containing M, wherein said M is selected from at least one of Ag, Au, Pt, Pd, and Cu nanoparticles;
selecting source compound of Y, source compound of Ln and said aluminium oxide aerogel containing M according to stoichiometric ratios of corresponding elements in general molecular formula of Y₃₋ₓAl₅O₁₂:Lnₓ,M_{y}, mixing and grinding uniformly to form mixture material, calcining said mixture material under reducing atmosphere at 1300°C to 1700°C for 2 to 8 hours, cooling and grinding to obtain aluminate luminescent material has a general molecular formula of Y₃₋ₓAl₅O₁₂:Lnₓ,M_{y}, wherein Ln is selected from at least one of Ce and Tb, x is in a range of 0<x≤0.05, y is a molar ratio of M to Al and y is in a range of 0<y ≤1 × 10⁻².

5. The method for preparing said aluminate luminescent material as in claim 4, wherein a concentration of said M in said ethanol solution containing M is in a range of 5×10⁻⁶mol/L to 1×10⁻²mol/L.

6. The method for preparing said aluminate luminescent material as in claim 4, wherein said stirring is processed at 50°C to 75°C for 0.5 to 3 hours.

7. The method for preparing said aluminate luminescent material as in claim 4, wherein said sonicating is processed for 5∼20 mintues.

8. The method for preparing said aluminate luminescent material as in claim 4, wherein said drying is processed at 60°C to 150°C.

9. The method for preparing said aluminate luminescent material as in claim 4, wherein said source compound of Y is one of yttrium oxide, yttrium nitrate, yttrium carbonate, yttrium chloride and yttrium oxalate, said source compound of Ln is one of lanthanide oxide, lanthanide nitrate, lanthanide carbonate, lanthanide chloride and lanthanide oxalate.

10. The method for preparing said aluminate luminescent material as in claim 4, wherein said reducing atmosphere is selected from at least one of mixed gases of N₂ and H₂ reducing atmosphere, C powder reducing atmosphere, CO reducing atmosphere, and H₂ reducing atmosphere.
